# FASCICULE DE BREVET EUROPEEN

(11) **EP 2 678 536 B1**
(45) Date de publication et mention de la délivrance du brevet: **04.11.2015**
(21) Numéro de dépôt: 12704875.9
(22) Date de dépôt: 18.01.2012
(51) Int. Cl.: F01N 3/035, F01N 13/08, B60K 13/04, F01N 3/20

(54) **VEHICULE AUTOMOBILE COMPORTANT UNE LIGNE D'ECHAPPEMENT DONT LES MOYENS ACOUSTIQUES SONT DISPOSES EN AVANT DU TRAIN ARRIERE**
KRAFTFAHRZEUG BEINHALTEND EINE ABGASANLAGE WOBEI DIE AKUSTISCHE VORRICHTUNG VOR DEM HINTERADANTRIEB ANGEORDNET IST
VEHICLE COMPRISING AN EXHAUST GAS LINE WHEREIN THE ACCOUSTIC MEANS ARE PLACED IN FRONT OF THE REAR WHEELDRIVE TRAIN

(30) Priorité: 25.02.2011 FR 1151572
(43) Date de publication de la demande: 01.01.2014
(73) Titulaire: Peugeot Citroën Automobiles SA, 78140 Vélizy Villacoublay (FR)
(72) Inventeur: FERRAND, Nicolas, F-92000 Nanterre (FR); BOUDEVILLE, Thomas, F-92120 Montrouge (FR); LERE, Sylvain, F-75018 Paris (FR)
(74) Mandataire: Renous Chan, Véronique
(86) Numéro de dépôt international: PCT/FR2012/050106
(87) Numéro de publication internationale: WO 2012/114007

(56) Documents cités:
- EP-A1- 1 162 098
- DE-A1-102009 016 941
- FR-A1- 2 527 684
- JP-A- 59 226 222
- US-A- 3 090 464

## Description

L'invention porte sur l'architecture d'un véhicule automobile équipé d'un moteur à combustion, et en particulier sur l'architecture de la ligne d'échappement dudit moteur. Elle vise les véhicules automobiles équipés d'un moteur en partie avant du véhicule.

Les véhicules automobiles sont dans leur grande majorité équipés d'un moteur à combustion. Les moteurs à combustion sont classiquement équipés d'une ligne d'échappement qui a deux fonctions principales, à savoir de traiter les polluants contenus dans les gaz d'échappement et de réduire le bruit à l'échappement du moteur.

Concernant la fonction de réduction du bruit, elle est obtenue à l'aide d'un ou plusieurs dispositifs appelés silencieux, ou sourdine, qui consistent en une enveloppe métallique dans laquelle est ménagée une ou plusieurs chambres creuses, ainsi que des dispositifs faisant résonateurs ou générant des ruptures d'impédances dans ladite enveloppe. La constitution et l'optimisation des silencieux sont connues dans l'état de la technique. Ces dispositifs sont d'une manière générale relativement volumineux, et sont communément implanté sous le plancher des véhicules, en partie arrière. Plus précisément, pour un véhicule présentant un train avant et un train arrière, au moins un silencieux est disposé en arrière du train arrière.

Dans l'ensemble du présent document, les notions d'avant et d'arrière sont considérées selon l'acception commune de ces termes pour un véhicule automobile. En d'autres termes, le véhicule est conçu pour rouler majoritairement vers l'avant.

Concernant la fonction de traitement des polluants, les émissions polluantes des moteurs à combustion équipant les véhicules automobiles sont réglementées par des normes de plus en plus sévères. Les polluants réglementés sont, selon la technologie de moteur à combustion considérée, le monoxyde de carbone (CO), les hydrocarbures imbrûlés (HC), les oxydes d'azotes (NOx), et les particules.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azotes ; un filtre à particules peut être employé pour le traitement des particules de suie.

On désigne de manière générale ces dispositifs par le terme de moyens de « post-traitement » des gaz d'échappement.

Par exemple, pour satisfaire aux normes anti-pollution sur les émissions d'oxydes d'azote (NOx), un système spécifique de post-traitement peut être introduit dans la ligne d'échappement des véhicules, notamment des véhicules équipés de moteurs à mélange pauvre, c'est-à-dire du type diesel ou à allumage commandé fonctionnant avec un mélange stratifié (mélange carburé non-homogène présentant un taux de carburant inférieur à la stoechiométrie). Pour le traitement des oxydes d'azote (NOx), on connaît des technologies de réduction catalytique sélective, ou « SCR » pour « selective catalytic reduction », qui consistent à réduire les NOx par introduction d'un agent réducteur (ou d'un précurseur d'un tel agent réducteur) dans les gaz d'échappement. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

De manière générale, l'espace disponible sous le plancher d'un véhicule automobile est très contraint du fait de la nécessaire implantation de nombreux systèmes, parmi lesquels on peut citer : une part des systèmes de post-traitement (catalyseur SCR, filtre à particules), le réservoir de carburant, le réservoir d'additif pour filtre à particules additivé, la roue de secours, le réservoir de réducteur SCR, les trains roulant du véhicule, des artifices aérodynamiques, des batteries, de machines électriques d'un véhicule hybride, etc.

Il est connu de la demande de brevet français déposée au nom de la demanderesse sous le numéro FR 10 50453 (non publiée à ce jour) un système compact de traitement complet des gaz d'échappement destiné à un moteur Diesel, regroupant dans une enveloppe unique un catalyseur d'oxydation, un système SCR et un filtre à particules. On connait également au travers de la demande de brevet français déposée au nom de la demanderesse sous le numéro FR 11 51374 (non publiée à ce jour) un système regroupant les mêmes éléments de dépollution dans une architecture compacte en U. De tels dispositifs peuvent être totalement implantés en sous-capot moteur.

L'adoption d'un tel dispositif de post-traitement offre, outre des avantages en termes de performances des moyens de post-traitement, des avantages en termes d'implantation des systèmes dans le véhicule, en supprimant tout moyen de post-traitement de la zone sous-plancher du véhicule, voir la demande de brevet européen

EP1162098.

L'objectif de la présente invention est de proposer une architecture de véhicule automobile à moteur thermique en partie avant, permettant de tirer au mieux parti des avantages offert par l'emploi de moyen compacts de post-traitement des gaz d'échappement implanté dans l'espace sous-capot du moteur.

Plus précisément, l'invention porte donc sur un véhicule automobile comportant :
- un train avant et un train arrière ;
- un moteur à combustion dans un espace sous-capot avant,
- une ligne d'échappement du moteur à combustion comportant :
   - un catalyseur d'oxydation et un filtre à particules regroupés dans l'espace sous-capot avant ;
   - des moyens acoustiques de limitation du bruit à l'échappement ;
dans lequel les moyens acoustiques sont tous disposés en avant du train arrière du véhicule. Cette disposition particulière permet de tirer parti de la compacité des moyens de post-traitement dans une architecture globale optimisée du véhicule. Cela libère des volumes à l'arrière du véhicule, et apporte des avantages techniques et économiques au niveau de la ligne d'échappement : masse réduite, facilité de mise en oeuvre, coût d'obtention. L'invention permet également une limitation de la diversité des variantes architecturales des zones arrière de différentes silhouettes d'un même modèle de véhicule.

De préférence, les moyens de dépollution comportent en outre un catalyseur SCR.

De préférence, le véhicule présente un plancher, et les moyens acoustiques sont disposé dans un espace sous-plancher. On utilise ainsi des volumes libérés par le rapatriement sous-capot des moyens de post-traitement.

Selon un mode de réalisation préférentiel de l'invention, la ligne d'échappement présente son extrémité de canule en avant du train arrière du véhicule. On libère ainsi de toute contrainte d'implantation liée à la ligne d'échappement tout volume au niveau ou en arrière du train arrière du véhicule. La ligne d'échappement, plus courte, est plus facile à mettre en oeuvre (facilité de manipulation, gains logistiques, limitation du nombre de points d'accrochage, etc.).

Dans une variante de l'invention, l'extrémité de canule est disposée sous le plancher du véhicule. Cela apporte un avantage esthétique certain au véhicule équipé, et supprime de surcroit tout risque de brûlure ou de salissure par le conduit d'échappement.

De préférence, les moyens acoustiques de limitation du bruit comportent un silencieux ou une sourdine. C'est un moyen connu et maîtrisé de réduction du bruit à l'échappement.

Selon un mode de réalisation de l'invention, les moyens acoustiques de limitation du bruit comportent un premier silencieux et un second silencieux, les deux silencieux étant disposés en série. Cela permet un traitement efficace des bruits à l'échappement, tout en restant compatible de l'invention. Cela limite en outre le diamètre nécessaire à l'implantation des moyens acoustiques.

Dans une variante de l'invention, le premier silencieux présente un volume interne compris entre 3L et 7L, et le second silencieux présente un volume interne compris entre 3L et 7L. Dans une variante de l'invention, le véhicule est équipé d'un moteur d'une cylindrée comprise entre 1 L et 1,6L.

Cela correspond à un dimensionnement préférentiel, notamment pour de petits véhicules dans lesquels l'adoption de l'architecture proposée dans l'invention est particulièrement pertinente, car un petit véhicule pose de multiples problèmes d'implantation des différentes fonctions du véhicule.

Le véhicule selon l'invention peut présenter un porte-à-faux arrière inférieur à 500mm. L'invention permet également le raccourcissement du porte à faux arrière, permettant aux véhicules d'offrir une compacité maximale et/ou un empâtement de longueur maximale.

De préférence, le moteur à combustion d'un véhicule selon l'invention est un moteur à mélange pauvre C'est l'application préférentielle de l'invention, dans la mesure ou l'enjeu sur le traitement des NOx par SCR se pose tout particulièrement pour ce type de motorisation. Il peut donc s'agir d'un moteur du type Diesel. Il peut également s'agir d'un moteur à allumage commandé fonctionnant avec un mélange carburé dit pauvre, c'est-à-dire dont la teneur en carburant est inférieure à la stoechiométrie. Cela correspond notamment aux moteur à essence fonctionnant en mode dit « stratifié » (avec un mélange carburé non homogène).

L'invention est décrite plus en détail ci-après et en référence aux figures représentant schématiquement le système dans son mode de réalisation préférentiel.

La figure 1 présente schématiquement un véhicule automobile conforme à une variante de l'invention.

La figure 2 présente schématiquement un véhicule automobile conforme à une autre variante de l'invention.

La figure 3 présente schématiquement un véhicule automobile conforme à un premier mode de réalisation de l'invention, et détaille plus particulièrement sa ligne d'échappement.

La figure 4 présente schématiquement un véhicule automobile conforme à un deuxième mode de réalisation de l'invention, et détaille plus particulièrement sa ligne d'échappement.

La figure 5 présente schématiquement un véhicule automobile conforme à un troisième mode de réalisation de l'invention, et détaille plus particulièrement sa ligne d'échappement.

On a représenté schématiquement sur les différentes figures un véhicule automobile 1, qui comporte un train roulant avant 2 et un train roulant arrière 3 (ou plus simplement un train avant 2 et un train arrière 3). Le véhicule 1 est représenté sous la forme d'une silhouette semi-transparente, de sorte à distinguer le moteur à combustion 4, installé dans un espace sous-capot avant 5.

Le véhicule présente, de manière classique, un plancher 6, notamment sous l'habitacle du véhicule.

Le moteur 4 est doté d'une ligne d'échappement 7, qui comporte des moyens de dépollution 8, à savoir un catalyseur d'oxydation 81, un catalyseur SCR 82, un filtre à particules 83. Le catalyseur SCR 82 et le filtre à particules 83 peuvent être regroupés en un seul monolithe de traitement des gaz d'échappement, sous la forme d'un filtre à particules imprégné d'un revêtement catalytique adapté à la SCR.

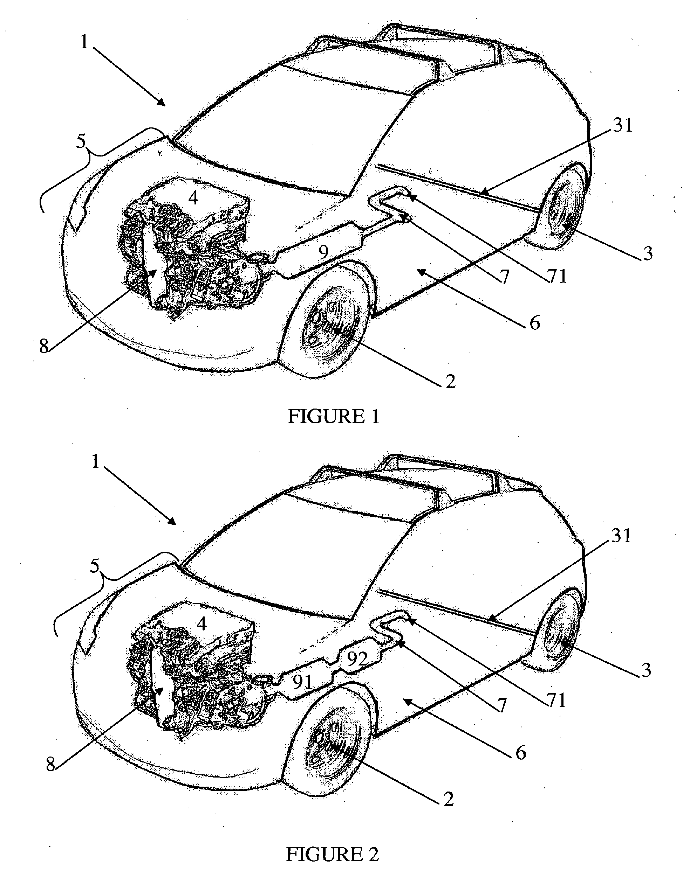

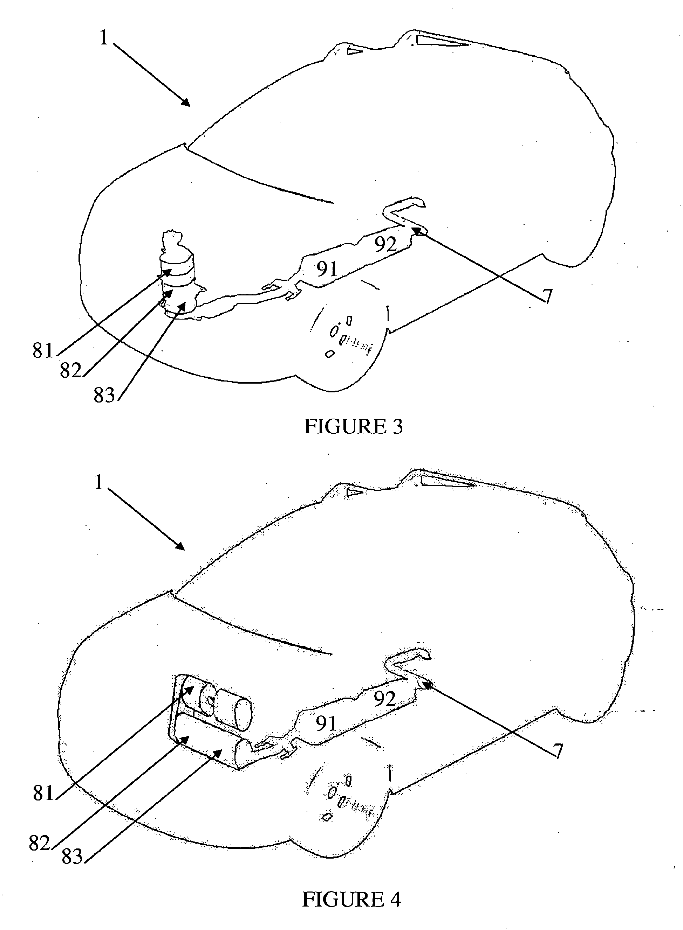

Dans l'invention, ces trois fonctions de traitement des gaz d'échappement sont réunies dans l'espace sous-capot moteur avant 5. Différentes architectures de moyens de post-traitement permettent cela, par exemple par l'emploi d'une enveloppe (généralement désignée par le terme anglais « canning ») unique tel que présenté sur les figures 1, 2 et 3, ou encore par une architecture regroupant un turbocompresseur et les éléments de post-traitement selon un forme en « U », tel que présenté en figure 4. Ces architectures ne sont bien évidemment que des exemples d'implantation possibles des moyens de post-traitement 8 en zone sous-capot moteur avant 5.

La ligne d'échappement présente également des moyens acoustiques 9 pour la réduction du bruit à l'échappement. Ces moyens acoustiques 9 présentent dans l'invention la particularité d'être tous disposés en avant du train arrière 3 du véhicule. Plus précisément, les moyens acoustiques sont disposés en avant d'une traverse 31 du train arrière, schématiquement représentée sur les figures 1 et 2.

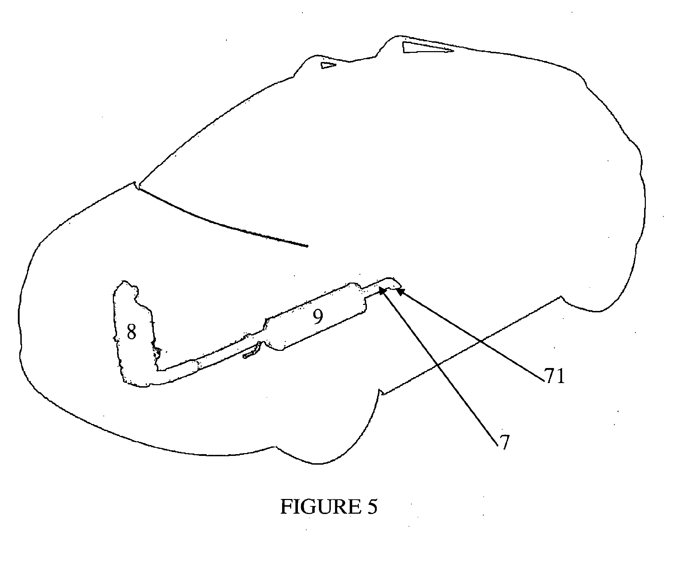

De préférence, l'extrémité de canule 71 de la ligne d'échappement est également positionnée en avant du train arrière. Dans le mode de réalisation ici représenté, l'extrémité de canule 71 est positionnée sous le plancher 6 du véhicule. Comme présenté en figure 5, la canule d'échappement peut être très courte, et, notamment associée à un silencieux unique, présenter une extrémité de canule très en avant du train arrière 3.

Les moyens acoustiques peuvent comporter un silencieux unique d'un volume suffisant pour assurer une limitation acceptable du bruit à l'échappement. Les moyens acoustiques peuvent notamment comporter un premier silencieux 91 et un second silencieux 92. Pour une application sur un moteur Diesel d'une cylindrée de 1 L à 1,6L, on peut notamment utiliser un premier silencieux d'un volume intérieur compris entre 3L et 7L, et de préférence de l'ordre de 5L, et un second silencieux 92 monté en série par rapport au premier silencieux 91, et d'un volume intérieur compris entre 3L et 7L, et de préférence de l'ordre de 5L.

En positionnant les moyen acoustiques 9 en avant de la traverse arrière 31, on libère des volumes d'implantation en partie arrière du véhicule, qui est une zone très contrainte par les nécessaires implantations de nombreux équipement (réservoirs, roue de secours, systèmes de suspensions, machines électriques, etc.).

Par ailleurs, la réduction de la longueur de la ligne d'échappement se traduit directement par des gains en termes de coûts d'obtention, mais également d'adaptation (par exemple par la limitation de la diversité des lignes d'échappement d'une silhouette de véhicule à une autre, la diminution du nombre des points d'accrochage sous caisse, la suppression des écrans thermiques généralement implantés autour du silencieux en zone arrière). Il en découle également des gains de masse, donc de consommation du véhicule.

L'invention offre de nombreux autres avantages. Elle permet de maximiser le volume du coffre à bagages du véhicule. Elle permet également l'obtention de véhicules présentant un porte à faux arrière très court, ce qui offre des avantages tant esthétiques qu'en matière d'équilibre du véhicule. Elle permet également de maximiser l'empattement de véhicule de petit gabarit, leur offrant ainsi plus de polyvalence d'utilisation.

Ces avantages sont obtenus sans dégradation des performances du moteur, et, en outre, sans augmenter la perte de charge de la ligne. Au contraire, l'invention permet même, selon l'application considérée, une diminution des pertes de charge par la réduction de la longueur de la ligne et du nombre de coudes qu'elle comporte avant son extrémité de canule

## Revendications

1. Véhicule automobile (1) comportant :
• un train avant (2) et un train arrière (3) ;
• un moteur à combustion (4) dans un espace sous-capot avant (5),
• une ligne d'échappement (7) du moteur à combustion (4) comportant :
- des moyens de dépollution (8) comprenant un catalyseur d'oxydation (81) et un filtre à particules (83), regroupés dans l'espace sous-capot avant (5) ;
- des moyens acoustiques (9) de limitation du bruit à l'échappement ;
- **caractérisé en ce que** les moyens acoustiques (9) sont tous disposés en avant du train arrière (3) du véhicule (1), **en ce que** la ligne d'échappement (7) présente son extrémité de canule (71) en avant du train arrière (3) du véhicule (1), et **en ce qu'**il est équipé d'un moteur (4) d'une cylindrée comprise entre 1 L et 1,6L.

2. Véhicule selon la revendication précédente, dans lequel les moyens de dépollution comportent en outre un catalyseur SCR.

3. Véhicule (1) selon l'une des revendications précédentes, dans lequel le véhicule (1) présente un plancher (6), et dans lequel les moyens acoustiques (9) sont disposés dans un espace sous-plancher.

4. Véhicule (1) selon l'une des revendications précédentes, dans lequel l'extrémité de canule (71) est disposée sous le plancher (6) du véhicule.

5. Véhicule (1) selon l'une des revendications précédentes, dans lequel les moyens acoustiques (9) de limitation du bruit comportent un silencieux ou une sourdine.

6. Véhicule selon la revendication précédente, dans lequel les moyens acoustiques (9) de limitation du bruit comportent un premier silencieux (91) et un second silencieux (92), les deux silencieux (91, 92) étant disposés en série.

7. Véhicule (1) selon la revendication précédente, dans lequel le premier silencieux (91) présente un volume interne compris entre 3L et 7L, et le second silencieux (92) présente un volume interne compris entre 3L et 7L.

8. Véhicule (1) selon l'une quelconque des revendications précédentes, présentant un porte-à-faux arrière inférieur à 500mm.

9. Véhicule (1) selon l'une quelconque des revendications précédentes, dans lequel le moteur à combustion (4) est un moteur à mélange pauvre.

## Patentansprüche

1. Kraftfahrzeug (1), umfassend:
• eine Vorderachse (2) und eine Hinterachse (3);
• einen Verbrennungsmotor (4) in einem Vorderraum unter der Motorhaube (5),
• eine Abgasleitung (7) des Verbrennungsmotors (4), umfassend:
- Reinigungsmittel (8), die einen Oxydationskatalysator (81) und einen Partikelfilter (83) umfassen, die im Vorderraum unter der Motorhaube (5) vereint sind;
- akustische Mittel (9) zur Auspufflärmbegrenzung;
- **dadurch gekennzeichnet, dass** die akustischen Mittel (9) alle vor der Hinterachse (3) des Fahrzeugs (1) angeordnet sind, dadurch, dass die Abgasleitung (7) ihr Kanülenende (71) vor der Hinterachse (3) des Fahrzeugs (1) aufweist, und dadurch, dass es mit einem Motor (4) ausgestattet ist, dessen Hubvolumen zwischen 1 l und 1,6 l beträgt.

2. Fahrzeug nach dem vorhergehenden Anspruch, wobei die Reinigungsmittel ferner einen SCR-Katalysator umfassen.

3. Fahrzeug (1) nach einem der vorhergehenden Ansprüche, wobei das Fahrzeug (1) einen Fußraum (6) aufweist, und wobei die akustischen Mittel (9) in einem Raum unter dem Fußraum angeordnet sind.

4. Fahrzeug (1) nach einem der vorhergehenden Ansprüche, wobei das Kanülenende (71) unter dem Fußraum (6) des Fahrzeugs angeordnet ist.

5. Fahrzeug (1) nach einem der vorhergehenden Ansprüche, wobei die akustischen Mittel (9) zur Lärmbegrenzung einen Schalldämpfer oder einen Geräuschdämpfer umfassen.

6. Fahrzeug nach dem vorhergehenden Anspruch, wobei die akustischen Mittel (9) zur Lärmbegrenzung einen ersten Schalldämpfer (91) und einen zweiten Schalldämpfer (92) umfassen, wobei die zwei Schalldämpfer (91, 92) in Serie angeordnet sind.

7. Fahrzeug (1) nach dem vorhergehenden Anspruch, wobei der erste Schalldämpfer (91) ein Innenvolumen aufweist, das zwischen 3 I und 7 l beträgt, und der zweite Schalldämpfer (92) ein Innenvolumen aufweist, das zwischen 3 l und 7 I beträgt.

8. Fahrzeug (1) nach einem der vorhergehenden Ansprüche, wobei es einen rückwärtigen Überstand von weniger als 500 mm aufweist.

9. Fahrzeug (1) nach einem der vorhergehenden Ansprüche, wobei der Verbrennungsmotor (4) ein Magermotor ist.

## Claims

1. Motor vehicle (1) comprising:
• a front axle (2) and a rear axle (3);
• a combustion engine (4) in a front under-bonnet space (5),
• an exhaust line (7) for the combustion engine (4) comprising:
- depollution means (8) comprising an oxidation catalyst (81) and a particle filter (83), grouped together in the front under-bonnet space (5);
- acoustic means (9) for limiting the exhaust noise;
- **characterised in that** the acoustic means (9) are all arranged in front of the rear axle (3) of the vehicle (1), **in that** the exhaust line (7) has its nozzle end (71) in front of the rear axle (3) of the vehicle (1) and **in that** it is equipped with an engine (4) with a cubic capacity of between 1 litre and 1.6 litres.

2. Vehicle according to the preceding claim, in which the depollution means further comprise an SCR catalyst.

3. Vehicle (1) according to one of the preceding claims, in which the vehicle (1) has a floor (6) and in which the acoustic means (9) are arranged in an under-floor space.

4. Vehicle (1) according to one of the preceding claims, in which the nozzle end (71) is arranged under the floor (6) of the vehicle.

5. Vehicle (1) according to one of the preceding claims, in which the noise-limitation acoustic means (9) comprise a silencer or a damper.

6. Vehicle according to the preceding claim, in which the noise-limitation acoustic means (9) comprise a first silencer (91) and a second silencer (92), the two silencers (91, 92) being arranged in series.

7. Vehicle (1) according to the preceding claim, in which the first silencer (91) has an internal volume of between 3 litres and 7 litres, and the second silencer (92) has an internal volume of between 3 litres and 7 litres.

8. Vehicle (1) according to any one of the preceding claims, having a rear overhang of less than 500 mm.

9. Vehicle (1) according to any one of the preceding claims, in which the combustion engine (4) is a lean-mixture engine.
